# EUROPEAN PATENT SPECIFICATION

(11) **EP 4 436 774 B1**
(45) Date of publication and mention of the grant of the patent: **04.02.2026**
(21) Application number: 22821613.1
(22) Date of filing: 11.11.2022
(51) Int. Cl.: B29D 30/26, B29D 30/06, B29D 30/00

(54) **PROCESS AND PLANT FOR HANDLING GREEN TYRES FOR BICYCLES**
VERFAHREN UND ANLAGE ZUR HANDHABUNG VON REIFENROHLINGEN FÜR FAHRRÄDER
PROCÉDÉ ET INSTALLATION DE MANIPULATION DE PNEUS CRUS POUR BICYCLETTES

(30) Priority: 24.11.2021 IT 202100029723
(43) Date of publication of application: 02.10.2024
(73) Proprietor: Pirelli Tyre S.p.A., 20126 Milano (IT)
(72) Inventor: MAZZUCCATO, Angelo, 20126 Milano (IT); BALIA, Stefano, 20126 Milano (IT); BELOTTI, Giancarlo, 20126 Milano (IT); BIGOGNO, Mauro, 28069 Trecate (NOVARA) (IT)
(74) Representative: Vittorangeli, Lucia
(86) International application number: PCT/IB2022/060864
(87) International publication number: WO 2023/094928

(56) References cited:
- WO-A1-2011/161994
- WO-A1-2018/122643
- DE-B- 1 181 901
- JP-A- H06 179 216
- JP-A- S 581 541
- SU-A1- 1 162 615
- US-A- 4 036 677
- US-A- 4 773 810
- US-A1- 2021 138 748

## Description

The present invention relates to a process and a plant for handling green tyres for bicycles.

The disclosure also relates to a support for green tyres for bicycles.

The building of a tyre for bicycles usually provides that one or more carcass plies are applied according to a cylindrical configuration around an outer surface of a building drum. Each bead core of a pair of bead cores is fitted or applied around one of the axially opposite end flaps of the carcass ply. The end flaps are then turned up around the respective bead cores forming respective beads of the green tyre. A tread band is then applied, generally directly around the carcass ply lying against the building drum, in an axially centred position with respect to the bead cores. The general lack of a belt structure is one aspect that distinguishes bicycle tyres from motor vehicle tyres.

The mutual axial distance between the bead cores remains unchanged during the entire building process, including the application of the tread band. This process aspect represents a further unique feature that distinguishes bicycle tyres from tyres for motor vehicles. For the latter, in fact, a mutual approach step of the bead cores is normally provided to shape the carcass structure according to a toroidal configuration in the coupling step with the belt structure.

Once the building has been completed, the green tyre for bicycles is removed from the drum to be transferred in a mould or a vulcanisation press, where the tyre itself is subjected to a moulding and vulcanisation treatment aimed at determining the structural stabilisation thereof via cross-linking of the elastomeric material present therein, as well as optionally imprinting a desired tread design on the tread band.

The term "elastomeric material" is used to designate a composition comprising at least one elastomeric polymer and at least one reinforcement filler. Preferably, such a composition further comprises additives such as cross-linking agents and/or plasticisers. Due to the presence of the cross-linking agents, such a material can be cross-linked by heating so as to form the final manufactured article.

The terms "radial" and "axial" and the expressions "radially inner/outer" and "axially inner/outer" are used with reference to the radial direction of the tyre (i.e. to a direction perpendicular to the geometric axis of rotation of the tyre) and to the axial direction of the tyre (i.e. to a direction parallel to the geometric axis of rotation of the tyre). A radial plane of the tyre contains the axis of rotation thereof.

The terms "circumferential" and "circumferentially" are used with reference to the annular extension of the tyre.

The terms "low", "high", "below", "above", "lower" and "upper" identify the relative position of an element, such as a component of a tyre, a tyre, an apparatus, a device, etc., with respect to the ground or of one of said elements with respect to another element.

"Geometric axis of rotation" of a green tyre means the axis corresponding to the axis of rotation of the vulcanised tyre when mounted in operating conditions on a respective mounting rim.

The term "contour" refers to the lines that define the green tyre circumferentially.

By "elongated shape" it is meant a shape extending mainly along one direction.

By "widened shape" it is meant a shape extending in at least two directions, preferably a shape uniformly distributed around a central axis, i.e. in which a prevailing extension direction cannot be found, even more preferably a convex polygonal shape.

"Suspended configuration" of a green tyre means a downward sloping configuration caused by the retention of an upper portion of the same green tyre.

CN111420832A discloses a machine for automatically spraying the inner surface of a bicycle tyre. A feed carriage supports the green tyre to be sprayed. Two horizontal access rods are inserted into the inner side of the green tyre to be sprayed hanging from a horizontal rod of the feed carriage and moved apart in opposite directions until the two horizontal access rods support the green tyre to be sprayed. The vertical frame is moved upwards until the green tyre to be sprayed is completely separated from the horizontal rod of the feed carriage.

After the spraying operation, the horizontal frame is brought closer to the feed carriage, and the vertical frame descends along the horizontal frame until the green tyre after spraying is completely hung on the horizontal rod of the feed carriage. The horizontal access rods move toward each other until the two side access rods are separated from the inner side of the green tyre after spraying.

WO2018/122643 and WO2018/122646 describe a method for handling a green tyre for bicycles in which the built tyre removed from the building drum, is profiled so as to translate the tread band in a radially outer direction with respect to the bead cores, so as to impart a cross-sectional convex profile to the tyre in a radially outer direction. The profiled tyre is engaged by means of a transfer member comprising a gripping device which retains it at the radially outer surface so as to maintain the cross-sectional convex profile in a radially outer direction.

The Applicant has noted that bicycle tyres, especially when green, are without a structural consistency sufficient to allow the proper handling thereof by means of known mechanical devices.

This is because bicycle tyres are often provided with bead cores in non-metallic material, for example in composite material based on natural or synthetic fibres (carbon, aramid, etc.) to allow the finished tyre to be folding. Moreover, as stated above, bicycle tyres are often devoid of reinforcement belt layers interposed between the carcass ply/plies and the tread band.

In particular, the Applicant has noted that once removed from the building drum, a green bicycle tyre tends to deform under the effect of internal stresses and of its own weight, and this is done randomly and uncontrollably in circumferential direction, where the circular shape is lost due to the low resistance of the bead cores, and/or in the axial extension direction due to the shrinkage of the materials or the weight itself of the components thereof.

For these reasons, bicycle tyres are often produced using mostly manual processes. CN111420832A, WO2018/122646 and WO2018/122643 represent attempts to manage some processing steps of green tyres for bicycles in an automated manner. With reference to CN111420832A, the Applicant has found that the green tyre always remains in an elongated configuration during the pick-up, the spraying and the return on the horizontal rod where it remains subject to the possible deformations typical of its structural inconsistency. WO 2011/161994 discloses a method to buff polish the inner surface of an annular member, such as precure tread in a method for recycling a used tire with worn tread.

With the methods and plants described in WO2018/122643 and WO2018/122646, the Applicant has implemented a first step towards the automation of the process for manufacturing bicycle tyres which mainly concerned the step of picking up from a transfer member in particular towards the vulcanisation mould.

The Applicant has moreover perceived that, in order to facilitate mechanised production, it is necessary to make sure that the green tyres can reach in an automated manner an adequate conformation and position for the purposes of subsequent processing.

The Applicant in fact deems it desirable to find a solution so that green tyres for bicycles can be handled by mechanised handling, maintaining a predetermined, precise and repeatable positioning, despite their tendency to take a substantially random deformed extension in all steps subsequent to the building.

The Applicant has perceived that by mechanically modifying the shape of the green tyre starting from a substantially known configuration, it can be brought to a configuration particularly suitable for the movements which are necessary at the end of the building up to entry into the vulcanisation mould.

Finally, the Applicant has found that arranging the green tyre for bicycles in a first elongated configuration, preferably suspended, and widening it with a spreader crown until it reaches a widened configuration allows the manual intervention to be limited and to make the positioning of the green tyre in a position suitable for subsequent transfer, for example into a vulcanisation mould, precise and repeatable, counteracting the tendency of the green tyre to assume a substantially random deformed extension.

More precisely, according to a first aspect thereof, the invention relates to a process for handling green tyres for bicycles according to claim 1.

The Applicant believes that the transition from an elongated configuration, preferably suspended, to a widened configuration on the spreader crown allows the handling process to be automated since a precise and repeatable positioning is defined irrespective of the tendency of the green tyre to assume a substantially random deformed extension.

According to a further aspect thereof, the invention relates to a plant for handling green tyres for bicycles according to claim 12.

The present invention, in at least one of the above aspects thereof, may exhibit at least one of the following preferred features.

Preferably, said green tyre is deformable circumferentially, axially and radially.

Preferably, said first configuration is a suspended configuration so that said contour falls with an elongated shape along the first radial direction arranged vertically.

Preferably, in an expansion position in which radial expansion of the spreader crown takes place, the spreader crown itself has a horizontally arranged central axis.

The Applicant believes that a suspended configuration simplifies both the storage step and the pick-up step and allows the gravity positioning of the green tyre to be exploited to counteract its natural tendency to deform.

Preferably, in the suspended configuration the contour has a triangular shape which falls at an own vertex thereof.

Preferably, it is provided to arrange a plurality of green tyres in a storage in which each green tyre is arranged in a suspended configuration in a manner such that the respective contour falls with an elongated shape along a radial direction that is arranged vertically.

Preferably, said storage is adapted to receive a plurality of green tyres, wherein each green tyre is arranged in a suspended configuration such that the respective contour falls with an elongated shape along a radial direction that is arranged vertically.

The Applicant believes that the presence of a storage in which the green tyres are arranged suspended allows the complete automation of the process to be automated, possibly leaving only the steps of managing the full and empty storages to the operator.

Preferably, a transfer gripper is provided which is configured to pick up one green tyre at a time from the storage and transfer it to the spreader crown while maintaining said configuration suspended.

Preferably, one green tyre is picked up at a time from the storage with a transfer gripper and transferred to the spreader crown while maintaining said suspended configuration.

Preferably, said transfer gripper is configured to impose said first configuration on said green tyre.

Preferably, said green tyre held by said transfer gripper has said first configuration.

Preferably, said transfer gripper is configured to circumferentially expand an upper circumferential portion of the green tyre during transfer from the storage to the spreader crown.

The Applicant believes that the use of a spreader gripper which maintains the suspended configuration of the green tyre allows the transfer thereof to be controlled, avoiding uncontrolled movements and deformations.

Preferably, imposing said first configuration comprises circumferentially expanding an upper circumferential portion of the green tyre during transfer from the storage to the spreader crown.

Preferably, said circumferential expansion imposes on the green tyre a substantially triangular shape which falls at a vertex thereof.

Preferably, said circumferential expansion is performed by the transfer gripper.

Preferably, said circumferential expansion is performed by the transfer gripper in cooperation with an intermediate holding device.

The Applicant believes that by imposing a substantially triangular configuration on the green tyre, the transition to the spreader crown is simplified.

Preferably, imposing said first configuration comprises arranging said green tyre resting on an upper portion of said spreader crown arranged in the radially contracted configuration.

Preferably, said spreader crown comprises a plurality of sliders circumferentially distributed around said central axis.

Preferably, radially expanding said spreader crown comprises moving said sliders according to a centrifugal direction up to reaching said radially expanded configuration in which said contour has a widened polygonal shape and in which said sliders define the vertices of said widened polygonal shape.

Preferably each slider comprises at least one roller arranged parallel to said central axis of the spreader crown and idle so as to facilitate the circumferential sliding of the green tyre.

Preferably, the widened shape of the green tyre in the second configuration is a convex polygonal widened shape.

Preferably, the polygonal shape has at least eight sides, even more preferably from eight to sixteen sides, for example fourteen sides.

The Applicant believes that the use of sliders and the definition of a polygonal shape represent an optimal compromise between the possibility of using a simple and effective support and the possibility of arranging the green tyre in a configuration suitable for being engaged by the transfer member.

Preferably, said control member is axially translatable along said central axis. More preferably, said control member achieves a synchronous radial motion of said sliders by means of its own axial movement.

Preferably, radially expanding said spreader crown comprises axially translating a control member operatively connected to each slider to generate a synchronous radial motion of said sliders.

The Applicant believes that the use of an axially translatable control member allows high radial strokes of the sliders to be achieved, for example such as to obtain a contracted diameter of 340 mm and an expanded diameter of 630 mm of the spreader crown, thus allowing the insertion of the same spreader crown inside the tyre arranged in the first configuration and then the subsequent automated transition to the second widened configuration.

Preferably, a detection system is provided, configured for acquiring data relating to the shape and axial position of the green tyre arranged in the second configuration.

Preferably, a control unit is provided, programmed for controlling said transfer member to engage said green tyre based on said data.

Preferably, provision is made for acquiring, before action e), data relative to the shape and to the axial position of the green tyre arranged in the second configuration.

Preferably, provision is made for controlling said transfer member in a manner such that it engages said green tyre based on said data.

Preferably, the data relating to the shape and axial position of the green tyre arranged in the second configuration are acquired by optical scanning of the green tyre.

The Applicant believes that detecting the shape and position of the green tyre arranged in the second configuration improves the precision and repeatability of the engagement by the transfer member.

Preferably, said spreader crown rotates about said central axis to perform an orientation rotation.

Preferably, a detection system is provided, configured for detecting the angular position with respect to the central axis of a marker of the green tyre arranged in the second configuration. Preferably, a control unit configured for comparing the detected angular position with a reference angular position is provided. Preferably, the control unit is programmed for carrying out, around said central axis, an orientation rotation of said spreader crown on which said green tyre is fit in a manner such to bring said marker into the angular reference position.

Preferably, before action e), provision is made to detect the angular position of a marker of said green tyre arranged in the second configuration with respect to said central axis.

Preferably, before action e), provision is made to compare the detected angular position with a reference angular position.

Preferably, before action e), provision is made to carry out, around said central axis, an orientation rotation of said spreader crown on which said green tyre is fit in a manner such to bring said marker into the angular reference position.

Preferably, the angular position of a marker of said green tyre arranged in the second configuration is acquired by optical scanning of the green tyre.

The Applicant believes that detecting the position of the marker and possibly correcting the position of such marker allows optimizing the subsequent transfer step, in particular the orientation of the green tyre in the vulcanisation mould.

Preferably, said support comprises an annular abutment suitable for defining a support for a lower bead of the green tyre.

Preferably, provision is made for arranging, before action e), a bead of the green tyre in contact with an annular abutment of the spreader crown in order to define the axial position of said green tyre arranged in the second configuration.

The Applicant believes that as an alternative or in addition to detecting the shape and position of the green tyre, the presence of an annular abutment allows the precision and repeatability of the engagement by the transfer member to be improved.

Preferably, said spreader crown is movable between an expansion position and a transfer position.

Preferably, in the expansion position, the spreader crown has the central axis arranged horizontally and in the transfer position the spreader crown has the central axis arranged vertically.

Preferably, provision is made for carrying out a transfer of the spreader crown on which said green tyre arranged in the second configuration is fit.

Preferably, said transfer takes place from an expansion position, in which the spreader crown is radially expanded to a transfer position, in which said transfer member engages said green tyre. Preferably, said transfer comprises carrying out, around a rotation axis perpendicular to said central axis, a positioning rotation of said spreader crown so as to modify the angular position of said central axis.

Preferably, in the expansion position, the spreader crown has the central axis arranged horizontally and in the transfer position the spreader crown has the central axis arranged vertically.

Preferably, provision is made for carrying out, around a rotation axis perpendicular to said central axis, a positioning rotation of the spreader crown on which said green tyre arranged in the second configuration is fit, so as to modify the angular position of said central axis and pass from the expansion position to a transfer position in which said transfer member engages said green tyre.

Preferably, the spreader crown undergoes a positioning rotation of 90°.

The Applicant believes that by providing two different positions, one for expansion and one for transfer, it is possible to optimise the two steps by exploiting the gravity positioning of the green tyre in the expansion position and exploiting the symmetry of forces and positioning of a vertical grip in the transfer position.

Preferably, provision is made for arranging, before action e), a lower bead of the green tyre in abutment against an annular abutment of the spreader crown in order to define the axial position of said green tyre arranged in the second configuration.

Preferably, provision is made for tilting the spreader crown in a manner such that the green tyre slides axially downward and the lower bead is abutted against the annular abutment of the spreader crown.

Preferably, provision is made for managing an initial step of the positioning rotation of the spreader crown such that during said initial step the green tyre slides axially downward and the lower bead is abutted against the annular abutment of the spreader crown.

Preferably, the inclination corresponds to an initial step of the positioning rotation which is managed so as to obtain axial sliding of the green tyre.

Preferably, during the inclination the spreader crown is completing its radial expansion or has ended it in such a way that the green tyre can in any case slide axially downwards. Alternatively, a slight contraction of the spreader crown may be provided to allow the green tyre to axially slide downwards.

The Applicant believes that exploiting the force of gravity to arrange the green tyre axially, in particular during the transfer of the spreader crown, allows both the structure and the operation of the support to be simplified, avoiding having to provide suitable devices or controls.

Preferably, said spreader crown comprises a plurality of sliders circumferentially distributed around said central axis which, in the radially expanded configuration of the spreader crown, define the vertices of a widened polygonal shape assumed by said contour.

Preferably, said transfer member comprises a plurality of grip points distributed around a grip axis.

Preferably, said grip points are greater or equal in number to the sides of said widened polygonal shape and distributed so that at least one grip point acts at one side of the widened polygonal shape at a radially outer surface of the green tyre.

Preferably, said transfer member comprises a plurality of grip points distributed around a grip axis.

Preferably, said grip points are greater or equal in number to the sides of said widened polygonal shape.

Preferably, engaging said green tyre comprises activating the grip points against a radially outer surface of the green tyre in the second configuration with at least one grip point acting at one side of the widened polygonal shape.

The Applicant believes that the polygonal shape is the one which allows the best positioning accuracy and repeatability as well as the best reliability in the engagement step by the transfer member, by virtue of the fact that it can engage the green tyre at the sides of the polygonal shape.

Preferably, after the green tyre has been engaged by the transfer member, the spreader crown is radially contracted and the green tyre is transferred to the next process by the transfer member.

Preferably, the transfer member is a loader of a vulcanisation mould.

Further features and advantages will become more apparent from the detailed description of a preferred but non-exclusive embodiment of a process and plant for handling green tyres for bicycles and of a support for green tyres for bicycles according to the present invention. Such a description is given hereinafter with reference to the accompanying drawings, provided only for illustrative and, therefore, non-limiting purposes, in which:
- Figure 1 schematically shows a plant for handling green tyres for bicycles according to a first embodiment,
- Figure 2 schematically shows a plant for handling green tyres for bicycles according to a second embodiment,
- Figures 3 and 4 schematically show front views of a support for green tyres for bicycles respectively in two operating configurations,
- Figures 5 and 6 schematically show lateral views of a support for green tyres for bicycles respectively in two operating configurations,
- Figure 7 schematically shows a lateral view of a storage of the plant for handling green bicycle tyres of Figure 1 or 2,
- Figures 8-22 schematically illustrate some steps of a process for handling green tyres for bicycles.

With reference to the accompanying figures, reference numeral 1 indicates a green tyre for bicycles.

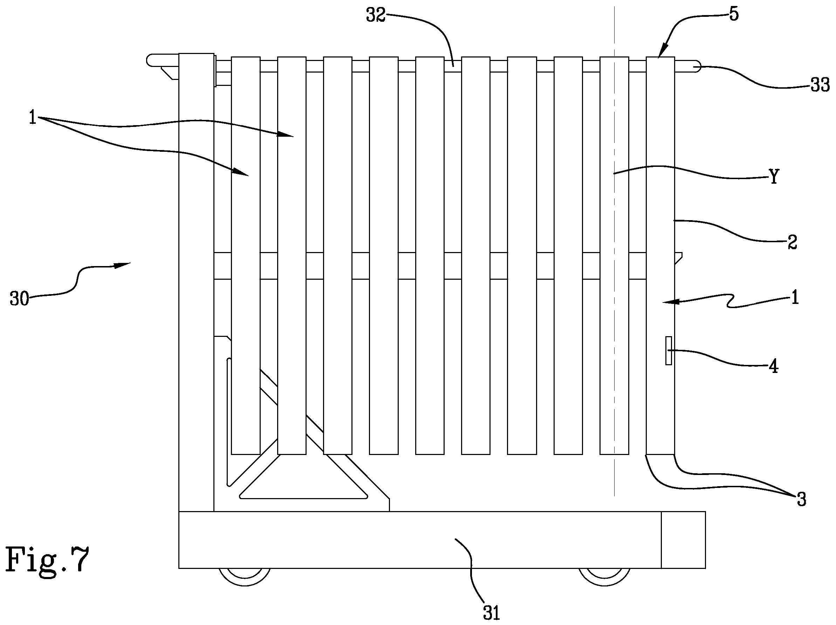

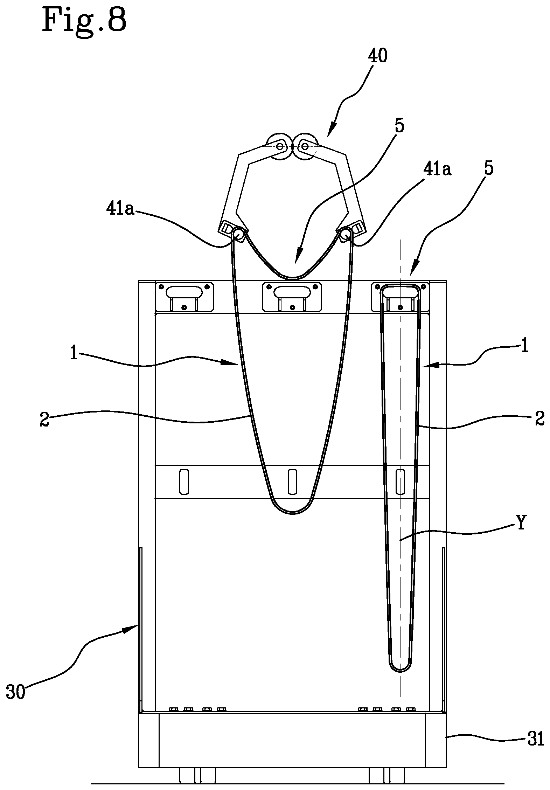

As illustrated for example in Figures 7 and 8, the green tyre 1 has an annular band shape which circumferentially defines a closed contour 2 and which is axially extended between respective beads 3 of the green tyre 1.

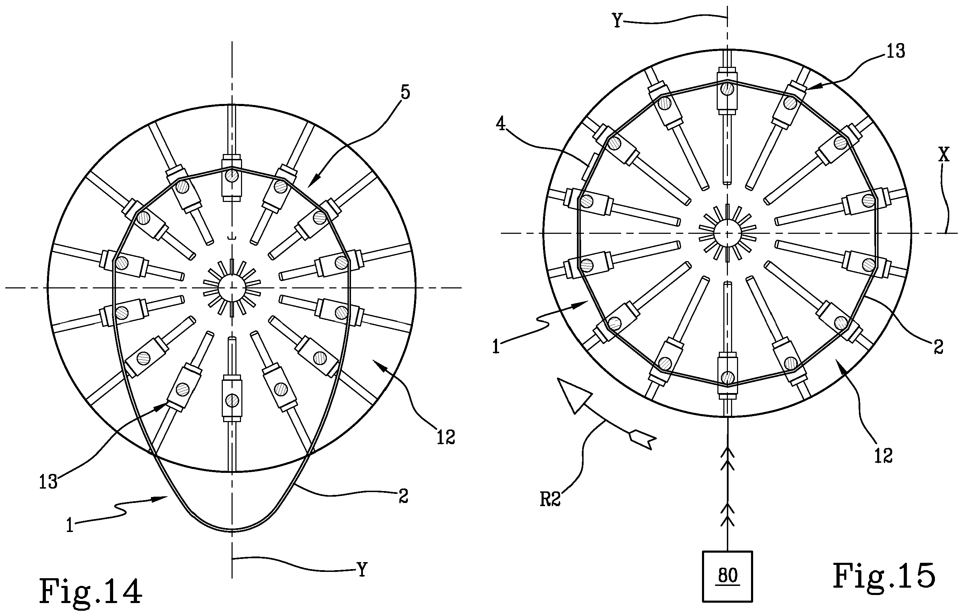

The green tyre 1 preferably comprises a marker 4 (Figure 7 and Figure 15). The marker 4 is preferably a label identifying the type of green tyre and/or the position of some parts of the green tyre (for example joints or the like).

A green tyre for bicycles is substantially devoid of structural consistency and, once removed from the building drum, tends to deform in a random and uncontrollable manner in the circumferential direction and/or in the axial extension direction.

With reference to the present description, at least two different configurations are imposed on the green tyre 1: a first configuration in which the contour 2 has an elongated shape along a first radial direction Y and a second configuration in which the contour 2 has a substantially widened shape both along the first radial direction Y and along a second radial direction X perpendicular to the first radial direction Y.

A suspended configuration may be imposed on the green tyre 1 so that the respective contour 2 falls with an elongated shape along a vertically arranged radial direction. In the suspended configuration, the green tyre 1 is retained at an upper circumferential portion 5.

Preferably, also said first configuration is a suspended configuration so that the contour 2 falls with an elongated shape along the first radial direction Y arranged vertically. In the suspended configuration the contour 2 may have a substantially triangular shape which falls at an own vertex thereof.

Reference numeral 10 indicated a support for green tyres 1.

The support 10 comprises a base 11 suitable for being placed on the ground S and a spreader crown 12 mounted on the base.

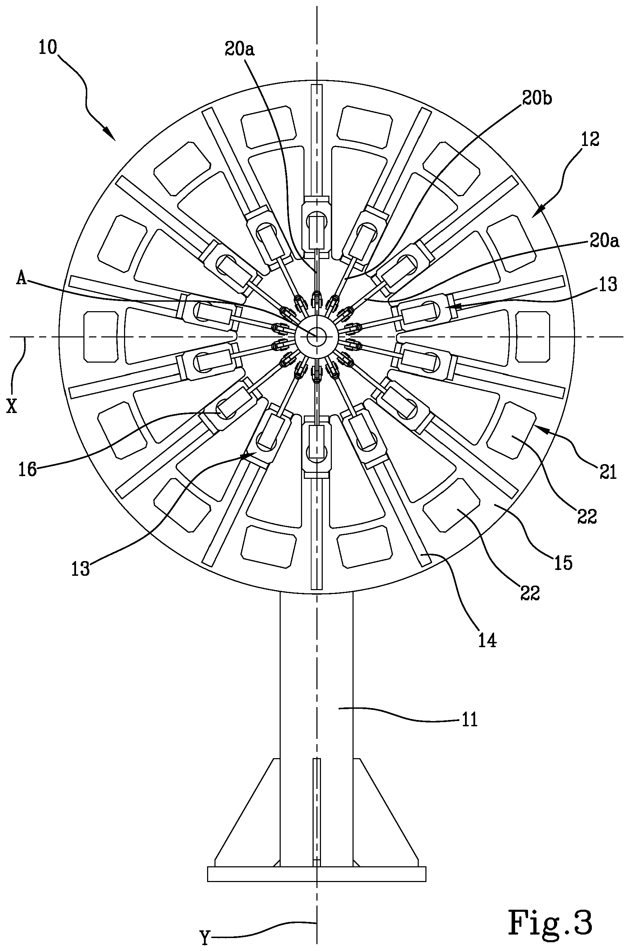

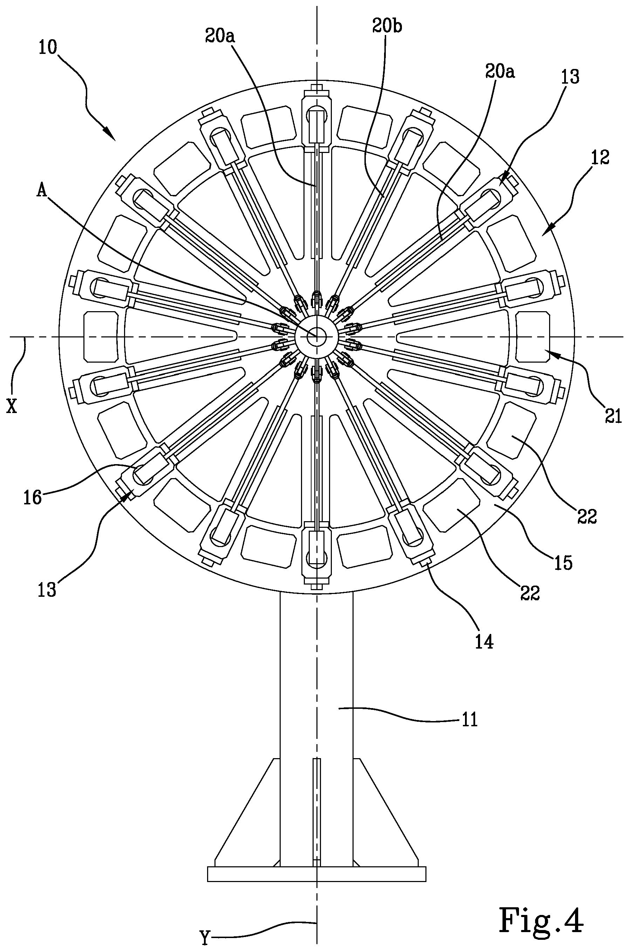

The spreader crown 12 is radially expandable and contractible with respect to a central axis A between a first radially contracted configuration (Figure 3) and a radially expanded configuration (Figure 4).

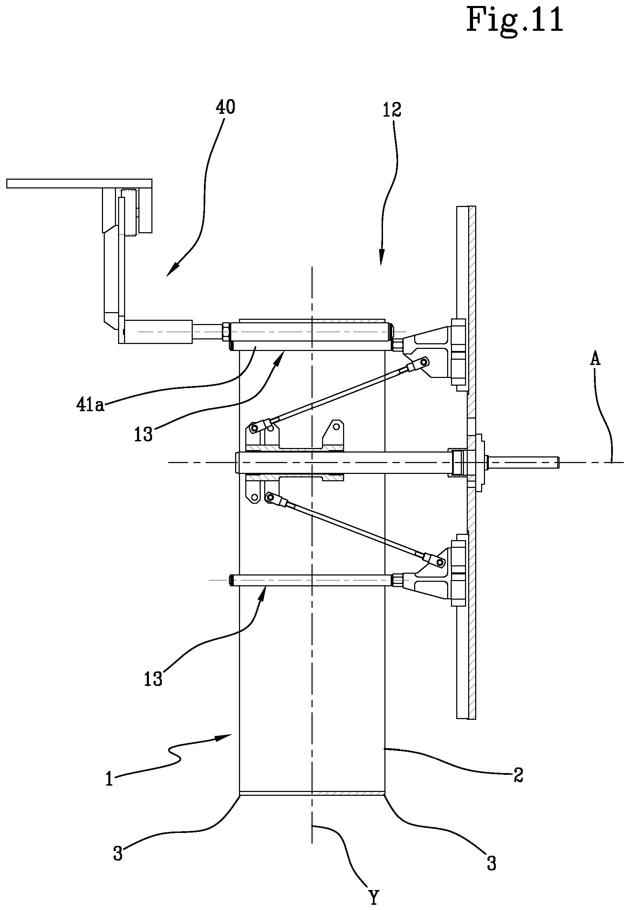

With reference to the green tyre 1, the spreader crown 12 is configured to expand radially against the contour 2 of the green tyre 1 arranged in the first configuration and having the first radial direction Y perpendicular to the central axis A of the spreader crown 12 (Figure 11). The expansion continues until the radially expanded configuration is reached in which the spreader crown 12 is configured for imposing the second configuration on the green tyre 1 (Figure 15). The green tyre 1 in the second configuration is fit on the spreader crown 12 and surrounds the central axis A.

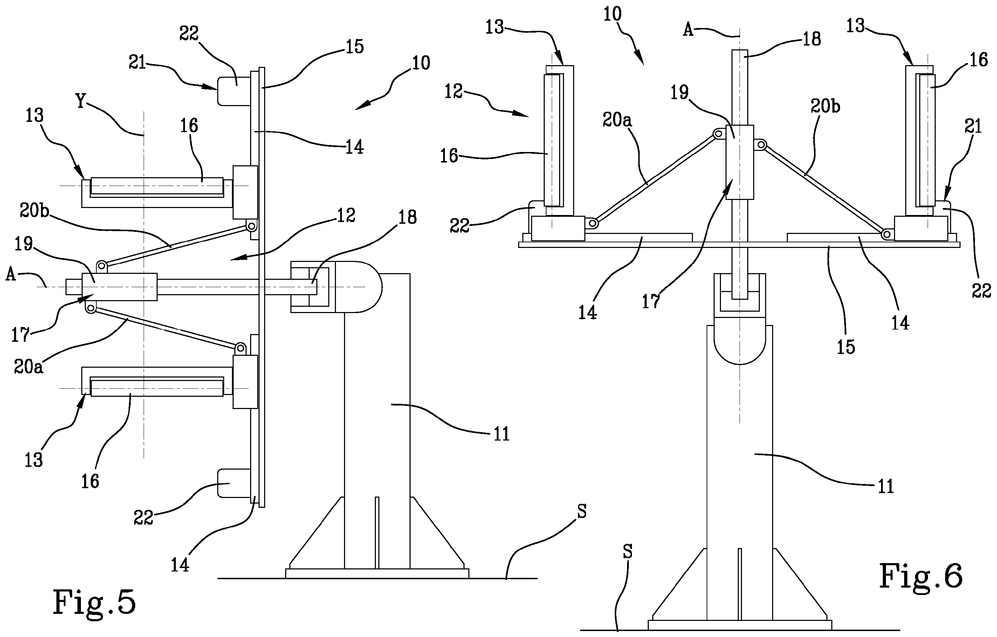

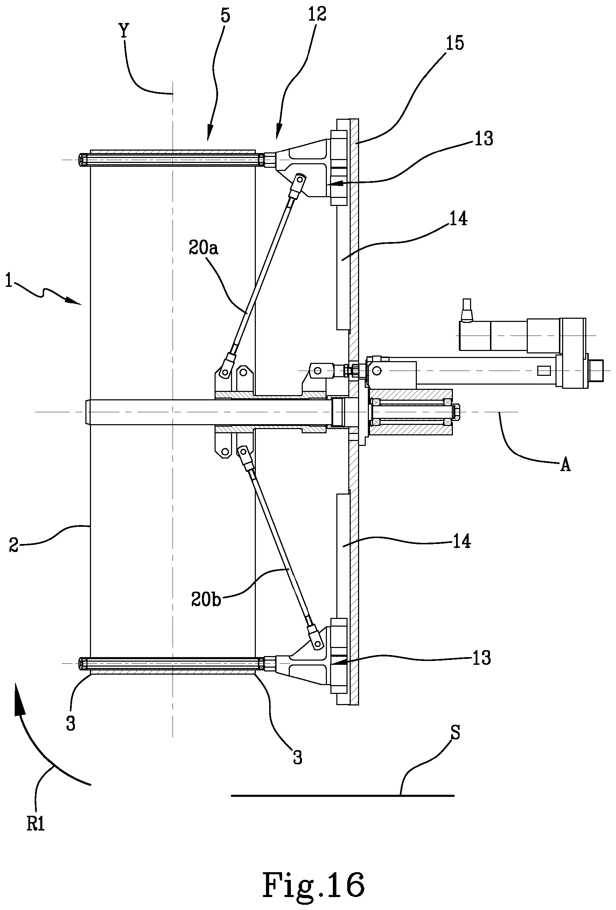

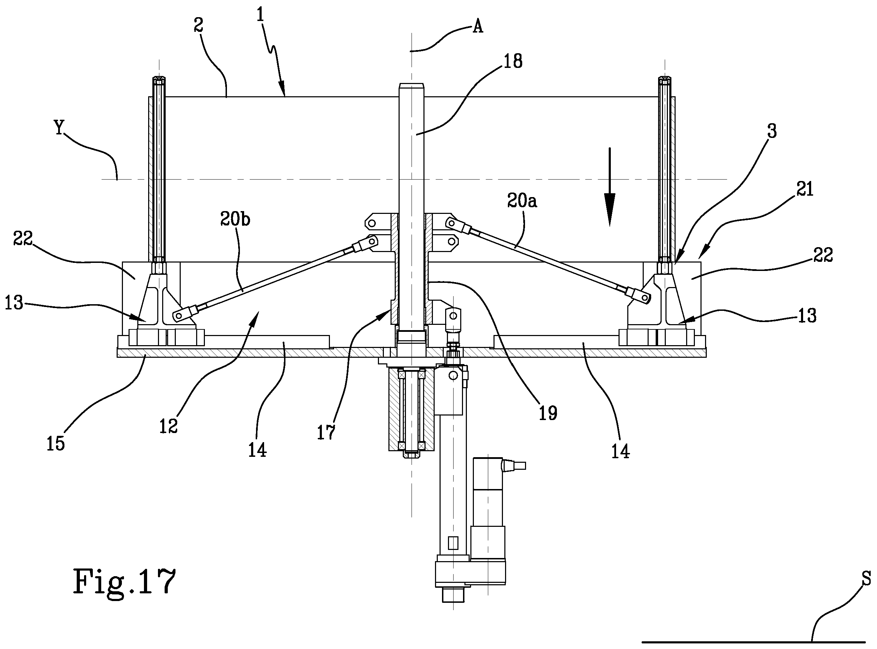

The base 11 and/or the spreader crown 12 are preferably configured so that the spreader crown 12 is movable between an expansion position (Figure 5 and Figure 16) and a transfer position (Figure 6 and Figure 17). Even more preferably, in the expansion position, the spreader crown 12 has the central axis A arranged horizontally and in the transfer position the spreader crown 12 has the central axis A arranged vertically.

For example, the spreader crown 12 is mounted on the base 11 so as to be movable between the expansion position and the transfer position by means of a positioning rotation R1 (Figure 16), preferably by 90°, around a rotation axis perpendicular to the central axis A.

Preferably, the spreader crown 12 is mounted on the base 11 so as to be able to rotate around the central axis A to perform an orientation rotation R2 (Figure 15).

Preferably, the spreader crown 12 comprises a plurality of sliders 13 distributed circumferentially around the central axis A. Preferably, from eight to sixteen sliders 13 are provided, even more preferably fourteen sliders 13. In some figures, only two diametrical sliders 13 are shown for simplicity of representation.

The plurality of sliders 13 is movable with respect to the central axis A between a radially contracted configuration corresponding to a radially internal position of each slider 13 (Figure 3) and a radially expanded configuration corresponding to a radially external position of each slider 13 (Figure 4). In the expansion of the spreader crown 12, the sliders 13 are moved according to a centrifugal direction and in the contraction of the spreader crown 12, the sliders 13 are moved according to a centripetal direction. Preferably, each slider 13 moves along a radial trajectory and even more preferably the spreader crown 12 comprises for each slider 13 a radial guide 14, for example obtained in a base 15 of the spreader crown 12, in which the respective slider 13 is slidingly engaged. Preferably, the base 15 is made by means of a disc-shaped body with spokes in which each spoke defines a radial guide 14 for a slider 13.

Preferably, each slider 13 comprises at least one roller 16 arranged parallel to the central axis A and idle so as to facilitate the circumferential sliding of the green tyre 1 during the radial expansion of the spreader crown 12.

Preferably, the sliders 13 are configured so that upon reaching the radially expanded configuration of the spreader crown 12, the contour 2 of the green tyre 1 in the second configuration has a widened polygonal shape of which the sliders 13 define the vertices. In the example illustrated in the figures, fourteen sliders 13 are provided which define a widened polygonal shape with fourteen sides.

A control member 17 is axially translatable along the central axis A and is operatively connected to each slider 13 so that the axial movement of the control member 17 causes a synchronous radial motion of the sliders 13 between the radially internal position and the radially external position. Preferably, the spreader crown 12 comprises a central shaft 18 which defines the central axis A. In this case, the control member 17 is preferably made by means of a sleeve 19 axially sliding along the central shaft 18.

The control member 17 is preferably connected to each slider 13 by means of a connecting pin 20a, 20b hinged to the control member 17 and to the respective slider 13. Preferably, two or more groups of connecting pins are provided, axially staggered both along the control member 17 and along the respective sliders 13 to facilitate the mechanical processes suitable for making the support 10 and for increasing the radial stroke of the sliders 13. Preferably, a first group of connecting pins 20a and a second group of connecting pins 20b are provided in which the respective connecting pins are circumferentially alternated with each other.

Preferably, the support 10 comprises an annular abutment 21 suitable for defining a contact element for a bead 3, in particular a support element for a lower bead 3 of the green tyre 1. The annular abutment 21 has radial dimensions such as to be able to act as a contact or support element for the green tyre 1 in the second configuration. In other words, the annular abutment 21 has radial dimensions such as to be arranged at the radially expanded configuration of the spreader crown 12. Preferably, the annular abutment 21 is associated with the base 15 of the spreader crown 12.

Preferably, the annular abutment 21 is made by means of a circumferential series of column elements 22 which extend axially from the base 15 of the spreader crown 12 and which alternate with the radial guides 14 at the radially external position reached by the sliders 13. In some figures, only two diametrical column elements 22 are shown for simplicity of representation.

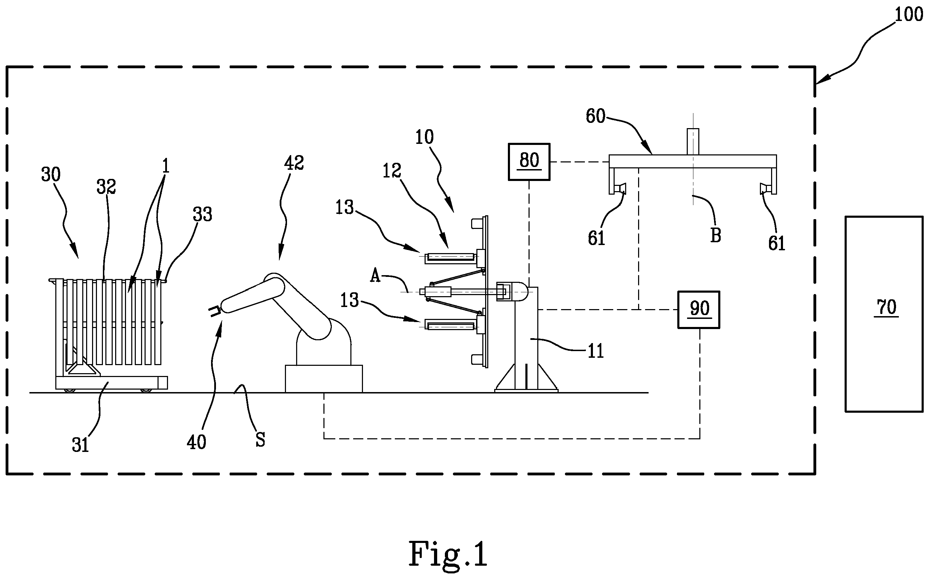

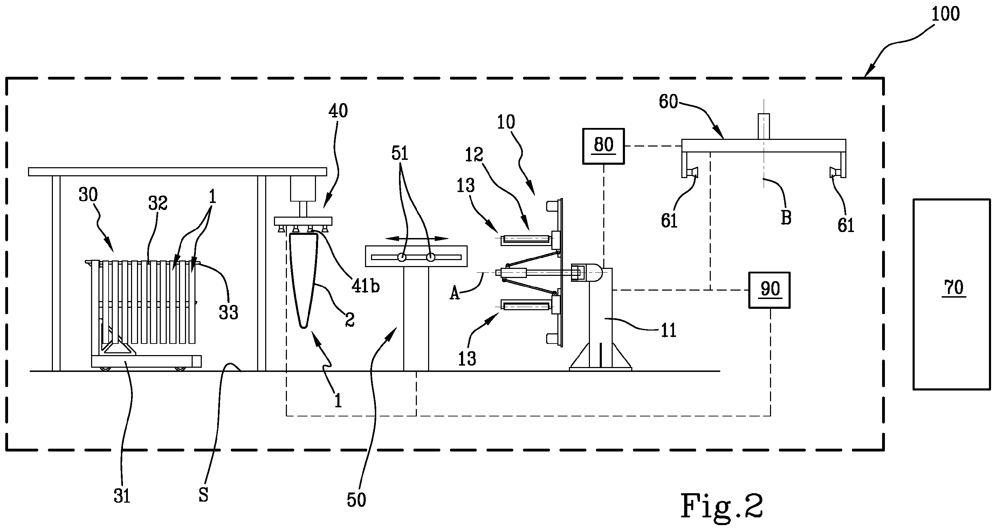

With reference to Figures 1 and 2, a plant 100 for handling green tyres 1 for bicycles is shown.

The installation 100 comprises a storage 30 adapted to receive green tyres 1 for bicycles and a support 10 for green tyres 1, in particular of the type described above.

The storage 30 is adapted to receive each green tyre 1 arranged in a suspended configuration such that the respective contour 2 falls with an elongated shape along a radial direction that is arranged vertically.

The storage 30 is, for example, made using at least one carriage 31 comprising at least one horizontal rod 32 cantilevered so as to have a free end 33. The horizontal rod 32 is suitable for accommodating a plurality of green tyres 1 resting at said upper circumferential portion 5 of each green tyre 1 and distributed along the length of the horizontal rod 32. Depending on the width of the type of green tyres being processed, the horizontal rod 32 may receive from three to ten green tyres 1. Preferably, two or more horizontal rods 32 parallel and side by side may be provided.

The plant 100 preferably comprises a transfer gripper 40 configured for picking up one green tyre 1 at a time from the storage 30 and transferring it to the spreader crown 12. Preferably, the transfer gripper 40 maintains the suspended configuration of the green tyre 1 during the transfer. In other words, the transfer gripper 40 is configured to hold the upper circumferential portion 5 of the green tyre.

Preferably, the transfer gripper 40 is configured for picking up a green tyre 1 by inserting inside the contour 2, for example by means of gripping fingers 41a (Figure 1 and Figures 8-13). Alternatively, the transfer gripper 40 is configured for picking up a green tyre 1 by holding it from the outside, for example by means of holding devices 41b (Figure 2) operating by applying vacuum, for example suction cups.

Preferably, the transfer gripper 40 is arranged at the end of an anthropomorphic robotic arm 42 (Figure 1) operating on at least six axes, preferably on seven axes. Alternatively, the transfer gripper is mounted on a Cartesian manipulator 43 (Figure 2) operating on three axes, preferably on four axes.

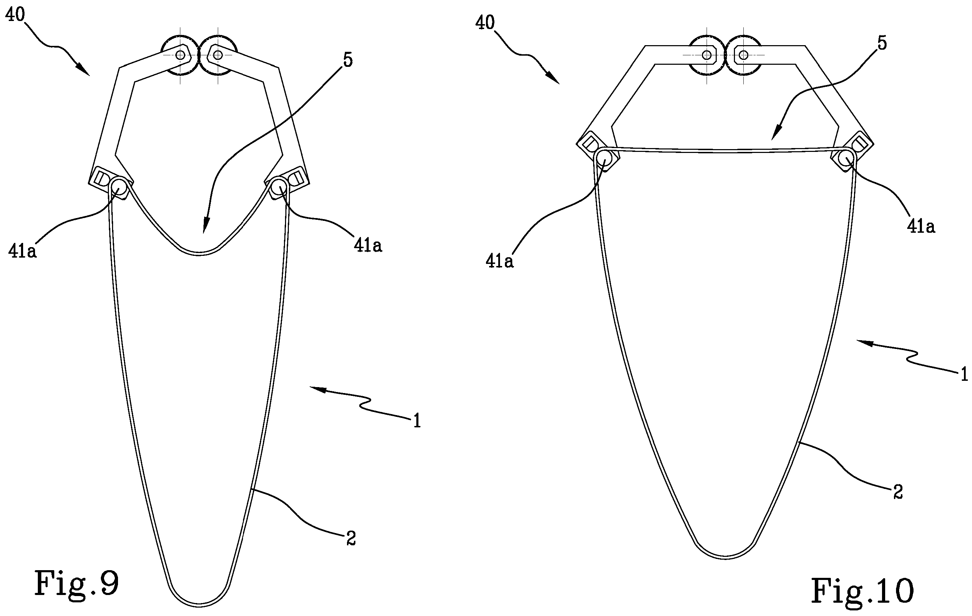

Preferably, the transfer gripper 40 is configured for imposing the first configuration on the green tyre 1 by maintaining the suspended configuration imposed on the green tyre 1 in the storage 30 or by slightly modifying such configuration. For example, the transfer gripper 40 is configured for expanding the upper circumferential portion 5 of the green tyre 1 circumferentially during transfer from the storage 30 to the spreader crown 12, preferably to obtain a substantially triangular shape which falls at its own vertex (Figure 10).

Preferably, the plant 100 comprises an intermediate transfer device 50 (Figure 2), operatively interposed between the storage 30 and the support 10. Preferably, the intermediate transfer device 50 is configured for cooperating with the transfer gripper 40 to expand the upper circumferential portion 5 of the green tyre 1 circumferentially during transfer from the storage 30 to the spreader crown 12, for example to obtain a substantially triangular shape which falls at its own vertex (Figure 10). For example, the intermediate transfer device 50 comprises two rods 51 suitable for being inserted inside the contour 2 of the green tyre 1 held by the transfer gripper 40 and movable towards and away from each other.

Preferably, the intermediate transfer device 50 is used in the event that the transfer gripper 40 is mounted on the Cartesian manipulator 43 and/or in the case in which the transfer gripper 40 is configured for picking up a green tyre 1 by holding it from the outside. In this last case, the green tyre 1 is held by the transfer gripper 40 at a first part of the upper circumferential portion 5 and the intermediate transfer device 50 is preferably configured to fit inside the contour 2 and to expand the green tyre 1 at the top so that the retention from the outside carried out by the transfer gripper 40 is extended until it affects a second part of the upper circumferential portion 5 greater than the first part of the upper circumferential portion 5. For example, the green tyre 1 is initially held by a part of the holding devices 41b of the transfer gripper 40 and the two rods 51, by moving away from each other, expand the first part of the upper circumferential portion 5 so as to involve a greater number of the holding devices 41b of the transfer gripper 40.

The plant 100 further comprises a transfer member 60.

The transfer member 60 is configured for engaging the green tyre 1 in the second configuration, fit on the spreader crown 12 and surrounding the central axis A. Furthermore, the transfer member 60 is configured for picking up the green tyre 1 and transferring it to the subsequent process, preferably a vulcanisation.

Preferably, the transfer member 60 comprises a plurality of grip points 61 distributed around a grip axis B and configured to be activated against a radially outer surface of the green tyre 1 in the second configuration. Preferably, the grip points 61 are made by means of devices operating by applying vacuum, for example suction cups. Figures 1, 2 and 22 show two diametrical grip points 61 for ease of representation.

In the event that the sliders 13 of the spreader crown 12 impose a widened polygonal shape on the green tyre 1, the gripping points 61 are preferably arranged in such a way and in such a number that at least one grip point 61 is activated at each side of the widened polygonal shape, thus engaging the green tyre 1. Even more preferably, the grip points 61 are equal in number to the sides of the widened polygonal shape and uniformly distributed around the grip axis B.

Preferably, the transfer member 60 is a loader of a vulcanisation mould 70.

Preferably, the plant 100 comprises a detection system 80 for example comprising a television camera or other devices such as optical sensors, feelers, or vision systems. The detection system 80 is configured to perform one or more of the following operations:
- detecting the angular position with respect to the central axis A of the marker 4 of the green tyre 1 arranged in the second configuration,
- acquiring data relative to the shape and to the axial position of the green tyre 1 arranged in the second configuration.

The plant 100 comprises a control unit 90 (Figures 1 and 2) programmed to operate the plant 100 in particular during a process for handling green tyres 1 for bicycles according to the following description.

Figures 8-22 illustrate by way of example the process for handling green tyres 1 for bicycles in which it is provided to arrange a green tyre 1 for bicycles (action a)). Preferably, provision is made to arrange a plurality of green tyres 1 in the storage 30 and in the suspended configuration as described above (Figure 8).

It is also provided to arrange the support 10 for green tyres (action b)) in which the spreader crown 12 is in the radially contracted configuration and in the expanded position. Preferably, the spreader crown 12 in the expanded position has a central axis A arranged horizontally.

One green tyre 1 at a time is picked up from the storage 30 with a transfer gripper 40 (Figure 8) and transferred to the spreader crown 12 keeping the suspended configuration (Figures 9-13). The green tyre 1 can be picked up by inserting the transfer gripper 40 inside the contour 2 as for example illustrated in Figures 8-13 or by holding the green tyre 1 from the outside as for example illustrated in Figure 2.

Preferably, provision is made for expanding the upper circumferential portion 5 of the green tyre 1 circumferentially during transfer from the storage 30 to the spreader crown 12, for example to obtain a substantially triangular shape which falls at its own vertex. This expansion can be performed directly by the transfer gripper 40 as for example illustrated in Figures 9 and 10 in which the grip fingers 41a hold two points of the contour 2 which are spaced apart by mutually moving the grip fingers 41a apart.

Alternatively, the circumferential expansion of the upper circumferential portion 5 can be carried out in collaboration with the intermediate transfer device 50. In the latter case, with reference to a situation in which the transfer gripper 40 holds the green tyre 1 from the outside at the first part of the upper circumferential portion 5, the intermediate transfer device 50 fits inside the contour 2 and expands the green tyre 2 upwards so that the transfer gripper 40 extends the holding at the second part of the upper circumferential portion 5 greater than the first part of the upper circumferential portion 5.

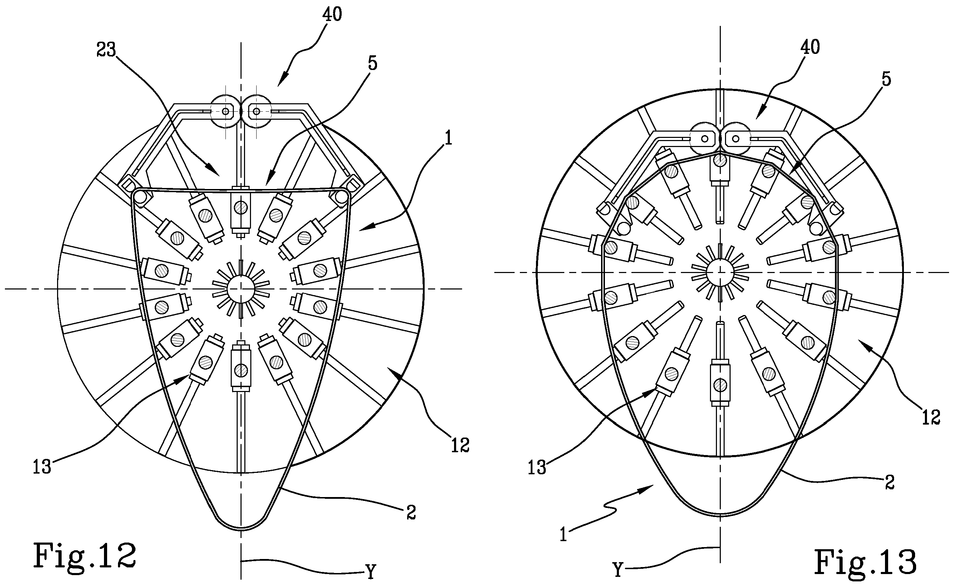

Subsequently, the transfer gripper 40 arranges the green tyre 1 around the spreader crown 12 (Figures 11 and 12).

Delivery of the green tyre 1 from the transfer gripper 40 to the spreader crown 12 takes place by arranging the green tyre 1 to rest on an upper portion 23 of the spreader crown 12 itself (Figures 13 and 14). The release on the spreader crown 12 can take place while the spreader crown 12 is in the contracted configuration or during the expansion of the spreader crown 12, as for example illustrated in Figure 13.

During the steps described above, the first configuration is imposed on the green tyre 1 (action c)) and, while the green tyre 1 is in the first configuration, the spreader crown 12 undergoes a radial expansion against the contour 2 of the green tyre 1 until the radially expanded configuration of the spreader crown 12 is reached such as to impose the second configuration on the green tyre 1.

According to a possible embodiment, the first configuration of the green tyre 1 corresponds to the configuration in which the transfer gripper 40 delivers it to the spreader crown 12, preferably arranging it resting on the upper portion 23 of the spreader crown 12 itself.

In the event that the spreader crown 12 comprises the sliders 13, the radial expansion of the spreader crown 12 provides for moving the sliders 13 according to a centrifugal direction until the radially expanded configuration is reached in which the contour 2 has a widened polygonal shape and in which the sliders define the vertices of the widened polygonal shape. This movement is preferably obtained by axially translating the control member 17 so as to generate a synchronous radial motion of the sliders 13.

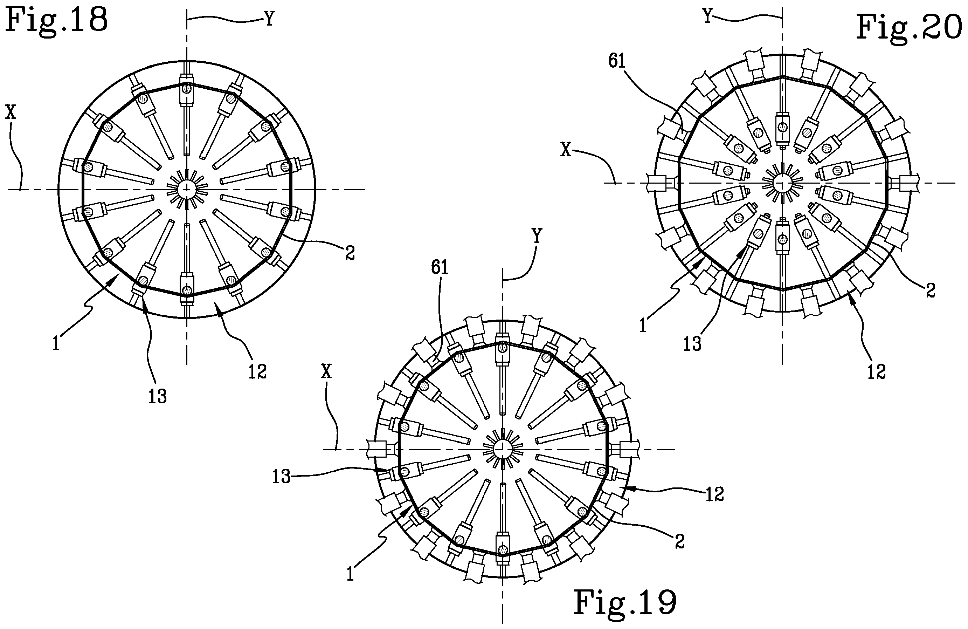

Finally, as illustrated for example in Figures 19 and 20, the green tyre 1 in the second configuration, fit on the spreader crown 12 and surrounding the central axis A, is engaged with the transfer member 60 (action e)).

In the event that the transfer member 60 comprises the grip points 61, each grip point is activated against a radially outer surface of the green tyre 1 in the second configuration at one side of the widened polygonal shape.

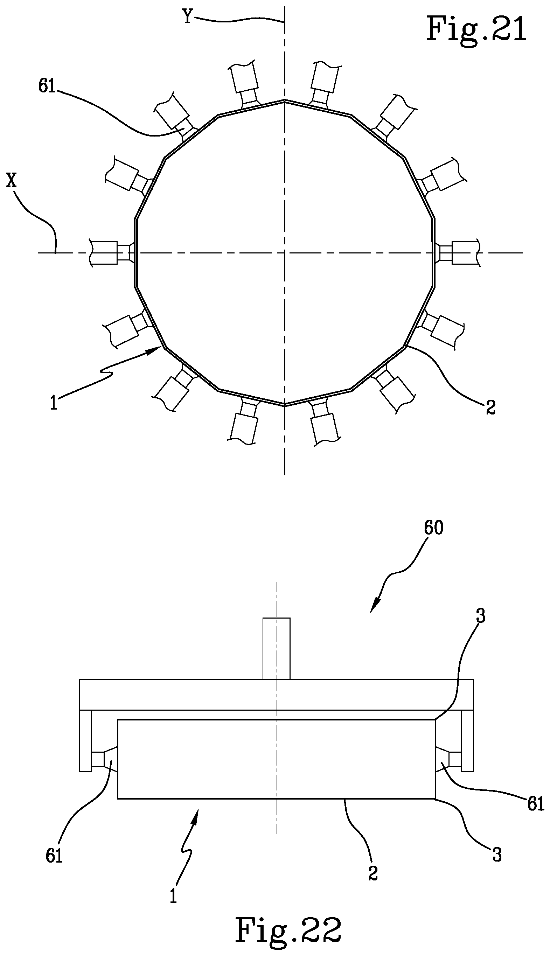

Subsequently, the spreader crown 12 is contracted radially (Figure 20) and the green tyre 1 is transferred to the subsequent process (Figures 21 and 22), for example to the vulcanisation mould 70.

Preferably, before action e), it is preferably provided that the spreader crown 12 on which the green tyre 1 arranged in the second configuration is fit undergoes a transfer from the expansion position to the transfer position (Figures 16 and 17).

To carry out this transfer it is preferably provided to carry out the positioning rotation R1 of the spreader crown 12 so as to modify the angular position of the central axis A. In particular, as described above, in the expanded position the spreader crown 12 has the central axis A arranged horizontally and in the transfer position the spreader crown 12 has the central axis A arranged vertically. In other words, the spreader crown undergoes a positioning rotation R1 of 90° so that the initially horizontal central axis A is oriented vertically.

Preferably, before action e), provision is made to arrange a bead 3 of the green tyre 1 in contact with the annular abutment 21 of the spreader crown 12 to define the axial position of the green tyre 1 arranged in the second configuration. Even more preferably, provision is made to arrange a lower bead 3 of the green tyre 1 to rest against the annular abutment 21 (Figure 17).

In this way, the green tyre 1 is precisely engaged by the transfer member 60.

For example, provision is made for tilting the spreader crown 12 in a manner such that the green tyre 1 slides axially downward and the lower bead 3 is abutted against the annular abutment 21. Preferably, the inclination corresponds to an initial step of the positioning rotation R1 whereby provision is made to manage this initial step so as to obtain the axial sliding of the green tyre 1. During the inclination the spreader crown 12 is completing its radial expansion or has ended it in such a way that the green tyre 1 can in any case slide axially downwards. Alternatively, a slight contraction of the spreader crown may be provided to allow the green tyre 1 to axially slide downwards.

In addition or as an alternative to arranging a bead 3 of the green tyre 1 in contact with the annular abutment 21, provision is preferably made for acquiring the data relating to the shape and axial position of the green tyre 1 arranged in the second configuration. Preferably, the acquisition of the data relating to the shape and axial position of the green tyre 1 are obtained by means of the detection system 80, in particular by optical scanning, for example by means of a television camera.

The data relating to the shape and axial position of the green tyre 1 are used to control the transfer member 60 so that the green tyre 1 is engaged based on the above data.

The control unit 90 is programmed to control the transfer member 60 on the basis of the above data while engaging the green tyre 1.

Preferably, before action e), provision is made to detect the angular position of the marker 4 of the green tyre 1 arranged in the second configuration with respect to the central axis A and the angular position detected is compared with a reference angular position.

In the event that the two positions do not coincide, it is preferably provided to carry out the orientation rotation R2 (Figure 15) so as to bring the marker 4 to the angular reference position.

Preferably, the angular position of the marker 4 is obtained by the detection system 80, in particular by optical scanning, for example by means of a television camera.

The control unit 90 is programmed to compare the angular position detected with a reference angular position and to carry out the orientation rotation of the spreader crown 12 on which the green tyre 1 is fit around the central axis A so as to bring the marker 4 to the reference angular position.

The positioning rotation R1 can take place before, during or after the orientation rotation R2.

## Claims

1. Process for handling green tyres (1) for bicycles wherein a green tyre for bicycles is a tyre in which a mutual axial distance between bead cores remains unchanged during the entire building process, including the application of a tread band, said process for handling green tyres (1) for bicycles comprising:
a) arranging a green tyre (1) for bicycles having annular band shape which circumferentially defines a closed contour (2) and which is axially extended between respective beads (3) of the green tyre (1),
b) arranging a support (10) for green tyres comprising a spreader crown (12) that is radially expandable and contractible with respect to a central axis (A), wherein said spreader crown (12) is situated in a radially contracted configuration,
c) imposing, on said green tyre (1), a first configuration in which said contour (2) has elongated shape along a first radial direction (Y) arranged perpendicular to said central axis (A),
d) while said green tyre (1) appears in said first configuration, radially expanding said spreader crown (12) against said contour (2) of the green tyre (1) up to reaching a radially expanded configuration of the spreader crown itself such to impose on said green tyre (1) a second configuration in which said contour (2) has substantially widened shape both along said first radial direction (Y) and along a second radial direction (X) perpendicular to said first radial direction (Y),
e) engaging, with a transfer member (60), said green tyre (1) in the second configuration, fit on the spreader crown (12) and surrounding said central axis (A).

2. Process for handling green tyres for bicycles according to claim 1, comprising arranging, before the action e), a bead (3) of the green tyre (1) in contact with an annular abutment (21) of the spreader crown (12) in order to define the axial position of said green tyre (1) arranged in the second configuration.

3. Process for handling green tyres for bicycles according to claim 1 or 2, comprising:
- acquiring, before the action e), data relative to the shape and to the axial position of the green tyre (1) arranged in the second configuration, and
- controlling said transfer member (60) in a manner such that it engages said green tyre (1) based on said data.

4. Process for handling green tyres for bicycles according to one or more of the preceding claims, comprising carrying out a transfer of the spreader crown (12) on which said green tyre (1) arranged in the second configuration is fit, wherein said transfer occurs from an expansion position in which the radial expansion of the spreader crown (12) takes place, to a transfer position in which said transfer member (60) engages said green tyre (1), wherein said transfer comprises carrying out, around a rotation axis perpendicular to said central axis (A), a positioning rotation (R1) of said spreader crown (12) so as to modify the angular position of said central axis (A).

5. Process for handling green tyres for bicycles according to claim 4, wherein in the expansion position, the spreader crown (12) has the central axis (A) arranged horizontally and in the transfer position the spreader crown (12) has the central axis (A) arranged vertically.

6. Process for handling green tyres for bicycles according to one or more of the preceding claims, wherein said first configuration is a suspended configuration such that said contour (2) falls with an elongated shape along the first radial direction (Y) arranged vertically and wherein, in an expansion position in which the radial expansion of the spreader crown (12) takes place, the spreader crown itself appears with central axis (A) arranged horizontally.

7. Process for handling green tyres for bicycles according to claim 6, comprising arranging a plurality of green tyres (1) in a storage (30) in which each green tyre (1) is arranged in a suspended configuration in a manner such that the respective contour (2) falls with an elongated shape along a radial direction that is arranged vertically.

8. Process for handling green tyres for bicycles according to one or more of the claims from 6 to 7, wherein arranging, a bead (3) of the green tyre (1) in contact with the annular abutment (21) of the spreader crown (12) comprises, arranging a lower bead (3) of the green tyre (1) in abutment against the annular abutment (21) of the spreader crown (12).

9. Process for handling green tyres for bicycles according to claim 8, comprising tilting the spreader crown (12) in a manner such that the green tyre (1) slides axially downward and the lower bead (3) is abutted against the annular abutment (21) of the spreader crown (12).

10. Process for handling green tyres for bicycles according to claim 8, comprising carrying out, around a rotation axis perpendicular to said central axis (A), a positioning rotation (R1) of the spreader crown (12) on which said green tyre (1) arranged in the second configuration is fit, so as to modify the angular position of said central axis (A) and pass from the expansion position to a transfer position in which said transfer member (60) engages said green tyre (1) and managing an initial step of the positioning rotation (R1) of the spreader crown (12) such that during said initial step the green tyre (1) slides axially downward and the lower bead (3) is abutted against the annular abutment (21) of the spreader crown (12).

11. Process for handling green tyres for bicycles according to one or more of the preceding claims, wherein said spreader crown (12) comprises a plurality of sliders (13) circumferentially distributed around said central axis (A) and wherein radially expanding said spreader crown (12) comprises moving said sliders (13) according to a centrifugal direction up to reaching said radially expanded configuration in which said contour (2) has widened polygonal shape and in which said sliders (13) define the vertices of said widened polygonal shape,
wherein said transfer member (60) comprises a plurality of grip points (61) distributed around a grip axis (B), said grip points (61) being of a number greater than or equal to the sides of said widened polygonal shape, and wherein engaging said green tyre (1) comprises activating the grip points (61) against a radially outer surface of the green tyre in the second configuration with at least one grip point (61) acting at one side of the widened polygonal shape.

12. Plant (100) for handling green tyres for bicycles wherein a green tyre for bicycles is a tyre in which a mutual axial distance between bead cores remains unchanged during the entire building process, including the application of a tread band, said plant for handling green tyres (1) for bicycles comprising:
- a storage (30) adapted to receive green tyres (1) for bicycles, wherein each green tyre (1) has annular band shape which circumferentially defines a closed contour (2) and which is axially extended between respective beads (3) of the green tyre (1),
- a support (10) for green tyres comprising a spreader crown (12) that is radially expandable and contractible with respect to a central axis (A) between a radially contracted configuration and a radially expanded configuration, wherein said spreader crown (12) is configured for being radially expanded against said contour (2) of the green tyre (1) arranged in a first configuration in which said contour (2) has elongated shape along a first radial direction (Y) perpendicular to said central axis (A) and in which said spreader crown (12) in the radially expanded configuration is configured for imposing, on said green tyre (1), a second configuration in which said contour (2) has substantially widened shape both along said first radial direction (Y) and along a second radial direction (X) perpendicular to said first radial direction (Y),
- a transfer member (60) configured for picking up said green tyre (1) in the second configuration, fit on the spreader crown (12) and surrounding said central axis (A).

13. Plant (100) for handling green tyres for bicycles according to claim 12, wherein said storage (30) is adapted to receive a plurality of green tyres (1), wherein each green tyre (1) is arranged in a suspended configuration such that the respective contour (2) falls with an elongated shape along a radial direction that is arranged vertically.

14. Plant (100) for handling green tyres for bicycles according to one or more of the claims from 12 to 13, wherein said spreader crown (12) comprises a plurality of sliders (13) circumferentially distributed around said central axis (A), wherein said plurality of sliders (13) is movable between a radially contracted configuration and a radially expanded configuration, wherein said support (10) comprises a driving member (17) operatively connected to each slider (13) so as to cause a radial motion of said sliders (13) and wherein said support (10) comprises an annular abutment (21) adapted to define an abutment for a lower bead (3) of the green tyre (1).

15. Plant for handling green tyres for bicycles according to one or more of the claims from 12 to 14, wherein said spreader crown (12) comprises a plurality of sliders (13) circumferentially distributed around said central axis (A) which, in the radially expanded configuration of the spreader crown (12), define the vertices of a widened polygonal shape taken on by said contour (2), and in which said transfer member (60) comprises a plurality of grip points (61) distributed around a grip axis (B), said grip points (61) being of a number greater than or equal to the sides of said widened polygonal shape and distributed such that at least one grip point (61) acts at one side of the widened polygonal shape at a radially outer surface of the green tyre (1).

## Patentansprüche

1. Verfahren zum Handhaben von Rohreifen (1) für Fahrräder, wobei ein Rohreifen für Fahrräder ein Reifen ist, bei dem ein gegenseitiger axialer Abstand zwischen Wulstkernen während des gesamten Bauprozesses, einschließlich des Aufbringens eines Laufflächenbandes, unverändert bleibt, wobei der Prozess zum Handhaben von Rohreifen (1) für Fahrräder umfasst:
a) Anordnen eines Rohreifens (1) für Fahrräder, der eine ringförmige Bandform aufweist, die in Umfangsrichtung eine geschlossene Kontur (2) definiert und die sich axial zwischen jeweiligen Wülsten (3) des Rohreifens (1) erstreckt,
b) Anordnen eines Trägers (10) für Rohreifen, der einer Spreizkrone (12) umfasst, die in Bezug auf eine Mittelachse (A) radial ausdehnbar und zusammenziehbar ist, wobei der Spreizkrone (12) in einer radial zusammengezogenen Konfiguration liegt,
c) Auferlegen, dem Rohreifen (1), eine erste Konfiguration, in der die Kontur (2) eine längliche Form entlang einer ersten radialen Richtung (Y) aufweist, die senkrecht zu der Mittelachse (A) angeordnet ist,
d) während der Rohreifen (1) in der ersten Konfiguration erscheint, radiales Ausdehnen der Spreizkrone (12) gegen die Kontur (2) des Rohreifens (1), bis zum Erreichen einer radial ausgedehnten Konfiguration der Spreizkrone selbst, um dem Rohreifen (1) eine zweite Konfiguration aufzuerlegen, in der die Kontur (2) eine im Wesentlichen verbreiterte Form sowohl entlang der ersten radialen Richtung (Y) als auch entlang einer zweiten radialen Richtung (X) senkrecht zu der ersten radialen Richtung (Y) aufweist,
e) Ergreifen, mit einem Übertragungselement (60), des Rohreifens (1) in der zweiten Konfiguration, an die Spreizkrone (12) angepasst und die Mittelachse (A) umgebend.

2. Prozess zum Handhaben von Rohreifen für Fahrräder nach Anspruch 1, umfassend das Anordnen, vor dem Schritt e), eines Wulsts (3) des Rohreifens (1) in Kontakt mit einem ringförmigen Widerlager (21) der Spreizkrone (12), um die axiale Position des Reifenrohlings (1), der in der zweiten Konfiguration angeordnet ist, zu definieren.

3. Prozess zum Handhaben von Rohreifen für Fahrräder nach Anspruch 1 oder 2, umfassend:
- Erfassen, vor dem Schritt e), von Daten in Bezug auf die Form und die axiale Position des Rohreifens (1), der in der zweiten Konfiguration angeordnet ist, und
- Steuern des Übertragungselements (60) auf solche Weise, dass es auf der Grundlage der Daten in den Rohreifen (1) eingreift.

4. Prozess zum Handhaben von Rohreifen für Fahrräder nach einem oder mehreren der vorstehenden Ansprüche, umfassend das Ausführen einer Übertragung der Spreizkrone (12), auf der der Rohreifen (1), der in der zweiten Konfiguration angeordnet ist, angepasst wird, wobei die Übertragung von einer Ausdehnungsposition, in der die radiale Ausdehnung der Spreizkrone (12) stattfindet, in eine Übertragungsposition, in der das Übertragungselement (60) mit dem Rohreifen (1) in Eingriff kommt, erfolgt, wobei die Übertragung das Ausführen, um eine Drehachse senkrecht zu der Mittelachse (A), einer Positionierungsdrehung (R1) der Spreizkrone (12), um die Winkelposition der Mittelachse (A) zu modifizieren, umfasst.

5. Prozess zum Handhaben von Rohreifen für Fahrräder nach Anspruch 4, wobei in der Ausdehnungsposition die Mittelachse (A) horizontal zur die Spreizkrone (12) angeordnet ist, und wobei in der Übertragungsposition die Mittelachse (A) vertikal zur die Spreizkrone (12) angeordnet ist.

6. Prozess zum Handhaben von Rohreifen für Fahrräder nach einem oder mehreren der vorstehenden Ansprüche, wobei die erste Konfiguration eine hängende Konfiguration ist, sodass die Kontur (2) mit einer länglichen Form entlang der ersten radialen Richtung (Y), die vertikal angeordnet ist, fällt, und wobei, in einer Ausdehnungsposition, in der die radiale Ausdehnung der Spreizkrone (12) stattfindet, die Spreizkrone selbst mit einer horizontal angeordneten Mittelachse (A) erscheint.

7. Prozess zum Handhaben von Rohreifen für Fahrräder nach Anspruch 6, der das Anordnen einer Vielzahl von Rohreifen (1) in einer Lagerung (30) umfasst, in der jeder Rohreifen (1) auf solche Weise in einer hängenden Konfiguration angeordnet wird, dass die jeweilige Kontur (2) mit einer länglichen Form entlang einer radialen Richtung, die vertikal angeordnet ist, fällt.

8. Prozess zum Handhaben von Rohreifen für Fahrräder nach einem oder mehreren der Ansprüche 6 bis 7, wobei Anordnen eines Wulstes (3) des Rohreifens (1) in Kontakt mit dem ringförmigen Widerlager (21) der Spreizkrone (12) das Anordnen eines unteren Wulstes (3) des Rohreifens (1) im Widerlager gegen das ringförmige Widerlager (21) der Spreizkrone (12) umfasst.

9. Prozess zum Handhaben von Rohreifen für Fahrräder nach Anspruch 8, umfassend ein Kippen der Spreizkrone (12) auf solche Weise, dass der Rohreifen (1) axial nach unten gleitet und der untere Wulst (3) an dem ringförmigen Widerlager (21) der Spreizkrone (12) aufliegt.

10. Prozess zum Handhaben von Rohreifen für Fahrräder nach Anspruch 8, umfassend das Durchführen, um eine Drehachse senkrecht zu der Mittelachse (A), einer Positionierungsdrehung (R1) der Spreizkrone (12), auf der der Rohreifen (1), der in der zweiten Konfiguration angeordnet ist, angepasst ist, um die Winkelposition der Mittelachse (A) zu modifizieren und von der Ausdehnungsposition in eine Übertragungsposition überzugehen, in der das Übertragungselement (60) in den Rohreifen (1) eingreift, und das Verwalten eines anfänglichen Schritts der Positionierungsdrehung (R1) der Spreizkrone (12), sodass während des anfänglichen Schritts der Rohreifen (1) axial nach unten gleitet und der untere Wulst (3) an dem ringförmigen Widerlager (21) der Spreizkrone (12) anliegt.

11. Prozess zum Handhaben von Rohreifen für Fahrräder nach einem oder mehreren der vorstehenden Ansprüche, wobei die Spreizkrone (12) eine Vielzahl von Schiebern (13) umfasst, die in Umfangsrichtung um die Mittelachse (A) verteilt sind, und wobei radiales Ausdehnen der Spreizkrone (12 ) ein Bewegen der Schieber (13) gemäß einer Zentrifugalrichtung bis zum Erreichen der radial ausgedehnten Konfiguration umfasst, in der die Kontur (2) eine verbreiterte polygonale Form aufweist und in der die Schieber (13) die Scheitelpunkte der verbreiterten polygonalen Form definieren,
wobei das Übertragungselement (60) eine Vielzahl von Greifpunkten (61) umfasst, die um eine Greifachse (B) verteilt sind, wobei die Anzahl der Greifpunkte (61) größer oder gleich als die Anzahl der Seiten der verbreiterten polygonalen Form sind, und wobei Ergreifen des Rohreifens (1) ein Aktivieren der Greifpunkte (61) an einer radial äußeren Oberfläche des Rohreifens in der zweiten Konfiguration mit mindestens einem Greifpunkt (61), der an einer Seite der verbreiterten polygonalen Form einwirkt, umfasst.

12. Anlage (100) zum Handhaben von Rohreifen für Fahrräder, wobei ein Rohreifen für Fahrräder ein Reifen ist, bei dem ein gegenseitiger axialer Abstand zwischen Wulstkernen während des gesamten Bauprozesses, einschließlich des Aufbringens eines Laufflächenbandes, unverändert bleibt, wobei die Anlage zum Handhaben von Rohreifen (1) für Fahrräder umfasst:
- eine Lagerung (30), die angepasst ist, um Rohreifen (1) für Fahrräder aufzunehmen, wobei jeder Rohreifen (1) eine ringförmige Bandform aufweist, die in Umfangsrichtung eine geschlossene Kontur (2) definiert und die sich axial zwischen jeweiligen Wülsten (3) des Rohreifens (1) erstreckt,
- einen Träger (10) für Rohreifen, der eine Spreizkrone (12) umfasst, die in Bezug auf eine Mittelachse (A) zwischen einer radial zusammengezogenen Konfiguration und einer radial ausgedehnten Konfiguration radial ausdehnbar und zusammenziehbar ist, wobei die Spreizkrone (12) konfiguriert ist, um radial gegen die Kontur (2) des Rohreifens (1) ausdehnt zu werden, der in einer ersten Konfiguration angeordnet ist, in der die Kontur (2) eine längliche Form entlang einer ersten radialen Richtung (Y) senkrecht zu der Mittelachse (A) aufweist, und wobei die Spreizkrone (12) in der radial ausgedehnten Konfiguration dazu ausgebildet ist, dem Rohreifen (1) eine zweite Konfiguration aufzuerlegen, in der die Kontur (2) eine im Wesentlichen verbreiterte Form sowohl entlang der ersten radialen Richtung (Y) als auch entlang einer zweiten radialen Richtung (X) senkrecht zu der ersten radialen Richtung (Y) aufweist,
- ein Übertragungselement (60), das zum Aufnehmen des Rohreifens (1) in der zweiten Konfiguration konfiguriert ist, an die Spreizkrone (12) angepasst und die Mittelachse (A) umgebend.

13. Anlage (100) zum Handhaben von Rohreifen für Fahrräder nach Anspruch 12, wobei die Lagerung (30) angepasst ist, um eine Vielzahl von Rohreifen (1) aufzunehmen, wobei jeder Rohreifen (1) in einer hängenden Konfiguration angeordnet ist, sodass der die jeweilige Kontur (2) mit einer länglichen Form entlang einer radialen Richtung fällt, die vertikal angeordnet ist.

14. Anlage (100) zum Handhaben von Rohreifen für Fahrräder nach einem oder mehreren der Ansprüche 12 bis 13, wobei die Spreizkrone (12) eine Vielzahl von Schiebern (13) umfasst, die in Umfangsrichtung um die Mittelachse (A) verteilt sind, wobei die Vielzahl von Schiebern (13) zwischen einer radial zusammengezogenen Konfiguration und einer radial ausgedehnten Konfiguration beweglich ist, wobei der Träger (10) ein Antriebselement (17) umfasst, das mit jedem Schieber (13) operativ verbunden ist, um eine radiale Bewegung der Schieber (13) zu bewirken, und wobei der Träger (10) ein ringförmiges Widerlager (21) umfasst, das angepasst ist, um ein Widerlager für einen unteren Wulst (3) des Rohreifens (1) zu definieren.

15. Anlage zum Handhaben von Rohreifen für Fahrräder nach einem oder mehreren der Ansprüche 12 bis 14, wobei die Spreizkrone (12) eine Vielzahl von in Umfangsrichtung um die Mittelachse (A) verteilten Schiebern (13) umfasst, die in der radial ausgedehnten Konfiguration der Spreizkrone (12) die Scheitelpunkte einer verbreiterten polygonalen Form definieren, die die Kontur (2) annimmt, und wobei das Übertragungselement (60) eine Vielzahl von Greifpunkten (61) umfasst, die um eine Greifachse (B) verteilt sind, wobei die Anzahl der Greifpunkte (61) größer oder gleich der Anzahl der Seiten der verbreiterten polygonalen Form ist und diese so verteilt sind, dass mindestens ein Greifpunkt (61) an einer Seite der verbreiterten polygonalen Form an einer radial äußeren Oberfläche des Rohreifens (1) einwirkt.

## Revendications

1. Procédé de manipulation de pneus crus (1) pour bicyclettes, dans lequel un pneu cru pour bicyclettes est un pneu dont la distance axiale mutuelle entre les tringles reste inchangée pendant tout le processus de fabrication, incluant l'application d'une bande de roulement, ledit procédé de manipulation de pneus crus (1) pour bicyclettes comprenant :
a) la disposition d'un pneu cru (1) pour bicyclettes présentant une forme de bande annulaire qui définit circonférentiellement un contour fermé (2) et qui s'étend axialement entre des talons respectifs (3) du pneu cru (1),
b) la disposition d'un support (10) pour pneus crus comprenant une couronne d'écartement (12) qui est radialement extensible et rétractable par rapport à un axe central (A), dans lequel ladite couronne d'écartement (12) est située dans une configuration radialement contractée,
c) l'imposition, sur ledit pneu cru (1), d'une première configuration dans laquelle ledit contour (2) présente une forme allongée le long d'une première direction radiale (Y) disposée perpendiculairement audit axe central (A),
d) tandis que ledit pneu cru (1) apparaît dans ladite première configuration, l'élargissement radial de ladite couronne d'écartement (12) contre ledit contour (2) du pneu cru (1) jusqu'à atteindre une configuration radialement élargie de la couronne d'écartement elle-même de manière à imposer audit pneu cru (1) une seconde configuration dans laquelle ledit contour (2) présente une forme sensiblement élargie à la fois le long de ladite première direction radiale (Y) et le long d'une seconde direction radiale (X) perpendiculaire à ladite première direction radiale (Y),
e) l'engagement, avec un élément de transfert (60), dudit pneu cru (1) dans la seconde configuration, monté sur la couronne d'écartement (12) et entourant ledit axe central (A).

2. Procédé de manipulation de pneus crus pour bicyclettes selon la revendication 1, comprenant la disposition, avant l'action e), d'un talon (3) du pneu cru (1) en contact avec une butée annulaire (21) de la couronne d'écartement (12) afin de définir la position axiale dudit pneu cru (1) disposé dans la seconde configuration.

3. Procédé de manipulation de pneus crus pour bicyclettes selon la revendication 1 ou 2, comprenant :
- l'acquisition, avant l'action e), des données relatives à la forme et à la position axiale du pneu cru (1) disposé dans la seconde configuration, et
- la commande dudit élément de transfert (60) de manière à ce qu'il s'engage avec ledit pneu cru (1) sur la base desdites données.

4. Procédé de manipulation de pneus crus pour bicyclettes selon une ou plusieurs des revendications précédentes, comprenant la réalisation d'un transfert de la couronne d'écartement (12) sur laquelle est monté ledit pneu cru (1) disposé dans la seconde configuration, dans lequel ledit transfert s'effectue d'une position d'expansion dans laquelle l'expansion radiale de la couronne d'écartement (12) a lieu, à une position de transfert dans laquelle ledit élément de transfert (60) s'engage avec ledit pneu cru (1), dans lequel ledit transfert comprend la réalisation, autour d'un axe de rotation perpendiculaire audit axe central (A), d'une rotation de positionnement (R1) de ladite couronne d'écartement (12) afin de modifier la position angulaire dudit axe central (A).

5. Procédé de manipulation de pneus crus pour bicyclettes selon la revendication 4, dans lequel, en position d'expansion, la couronne d'écartement (12) présente l'axe central (A) disposé horizontalement et, en position de transfert, la couronne d'écartement (12) présente l'axe central (A) disposé verticalement.

6. Procédé de manipulation de pneus crus pour bicyclettes selon une ou plusieurs des revendications précédentes, dans lequel ladite première configuration est une configuration suspendue telle que ledit contour (2) tombe selon une forme allongée le long de la première direction radiale (Y) disposée verticalement et dans lequel, dans une position d'expansion dans laquelle l'expansion radiale de la couronne d'écartement (12) a lieu, la couronne d'écartement elle-même apparaît avec un axe central (A) disposé horizontalement.

7. Procédé de manipulation de pneus crus pour bicyclettes selon la revendication 6, comprenant la disposition d'une pluralité de pneus crus (1) dans un espace de stockage (30) dans lequel chaque pneu cru (1) est disposé dans une configuration suspendue de telle sorte que le contour respectif (2) tombe avec une forme allongée le long d'une direction radiale qui est disposée verticalement.

8. Procédé de manipulation de pneus crus pour bicyclettes selon une ou plusieurs des revendications 6 à 7, dans lequel la disposition d'un talon (3) du pneu cru (1) en contact avec la butée annulaire (21) de la couronne d'écartement (12) comprend la disposition d'un talon inférieur (3) du pneu cru (1) en butée contre la butée annulaire (21) de la couronne d'écartement (12).

9. Procédé de manipulation de pneus crus pour bicyclettes selon la revendication 8, comprenant l'inclinaison de la couronne d'écartement (12) de manière à ce que le pneu cru (1) glisse axialement vers le bas et que le talon inférieur (3) soit appuyé contre la butée annulaire (21) de la couronne d'écartement (12).

10. Procédé de manipulation de pneus crus pour bicyclettes selon la revendication 8, comprenant la réalisation, autour d'un axe de rotation perpendiculaire audit axe central (A), d'une rotation de positionnement (R1) de la couronne d'écartement (12) sur laquelle est monté ledit pneu cru (1) disposé dans la seconde configuration, de manière à modifier la position angulaire dudit axe central (A) et à passer de la position d'expansion à une position de transfert dans laquelle ledit élément de transfert (60) s'engage avec ledit pneu cru (1), et la gestion d'une étape initiale de la rotation de positionnement (R1) de la couronne d'écartement (12) de telle sorte que, pendant ladite étape initiale, le pneu cru (1) glisse axialement vers le bas et que le talon inférieur (3) soit en butée contre la butée annulaire (21) de la couronne d'écartement (12).

11. Procédé de manipulation de pneus crus pour bicyclettes selon une ou plusieurs des revendications précédentes, dans lequel ladite couronne d'écartement (12) comprend une pluralité de curseurs (13) répartis circonférentiellement autour dudit axe central (A) et dans lequel l'expansion radiale de ladite couronne d'écartement (12) comprend le déplacement desdits curseurs (13) selon une direction centrifuge jusqu'à atteindre ladite configuration radialement élargie dans laquelle ledit contour (2) présente une forme polygonale élargie et dans laquelle lesdits curseurs (13) définissent les sommets de ladite forme polygonale élargie,
dans lequel ledit élément de transfert (60) comprend une pluralité de points de préhension (61) répartis autour d'un axe de préhension (B), lesdits points de préhension (61) étant en nombre supérieur ou égal aux côtés de ladite forme polygonale élargie, et dans lequel l'engagement dudit pneu cru (1) comprend l'activation des points de préhension (61) contre une surface radialement extérieure du pneu cru dans la seconde configuration avec au moins un point de préhension (61) agissant sur un côté de la forme polygonale élargie.

12. Installation (100) de manipulation de pneus crus pour bicyclettes, dans lequel un pneu cru pour bicyclettes est un pneu dont la distance axiale mutuelle entre les tringles reste inchangée pendant tout le processus de fabrication, incluant l'application d'une bande de roulement, ladite installation de manipulation de pneus crus (1) pour bicyclettes comprenant :
- un espace de stockage (30) adapté pour recevoir des pneus crus (1) pour bicyclettes, dans laquelle chaque pneu cru (1) présente une forme de bande annulaire qui définit circonférentiellement un contour fermé (2) et qui s'étend axialement entre des talons respectifs (3) du pneu cru (1),
- un support (10) pour pneus crus comprenant une couronne d'écartement (12) qui est radialement extensible et rétractable par rapport à un axe central (A) entre une configuration radialement contractée et une configuration radialement élargie, dans laquelle ladite couronne d'écartement (12) est configurée pour être étendue radialement contre ledit contour (2) du pneu cru (1) disposé dans une première configuration dans laquelle ledit contour (2) présente une forme allongée le long d'une première direction radiale (Y) perpendiculaire audit axe central (A) et dans laquelle ladite couronne d'écartement (12), dans la configuration radialement élargie, est configurée pour imposer, audit pneu cru (1), une seconde configuration dans laquelle ledit contour (2) présente une forme sensiblement élargie à la fois le long de ladite première direction radiale (Y) et le long d'une seconde direction radiale (X) perpendiculaire à ladite première direction radiale (Y),
- un élément de transfert (60) configuré pour saisir ledit pneu cru (1) dans la seconde configuration, monté sur la couronne d'écartement (12) et entourant ledit axe central (A).

13. Installation (100) de manipulation de pneus crus pour bicyclettes selon la revendication 12, dans laquelle ledit espace de stockage (30) est adapté pour recevoir une pluralité de pneus crus (1), dans laquelle chaque pneu cru (1) est disposé dans une configuration suspendue de telle sorte que le contour respectif (2) tombe avec une forme allongée le long d'une direction radiale qui est disposée verticalement.

14. Installation (100) de manipulation de pneus crus pour bicyclettes selon une ou plusieurs des revendications 12 à 13, dans laquelle ladite couronne d'écartement (12) comprend une pluralité de curseurs (13) répartis circonférentiellement autour dudit axe central (A), dans laquelle ladite pluralité de curseurs (13) est mobile entre une configuration radialement contractée et une configuration radialement élargie, dans laquelle ledit support (10) comprend un élément d'entraînement (17) relié fonctionnellement à chaque curseur (13) de manière à entraîner un mouvement radial desdits curseurs (13) et dans laquelle ledit support (10) comprend une butée annulaire (21) adaptée pour définir une butée pour un talon inférieur (3) du pneu cru (1).

15. Installation de manipulation de pneus crus pour bicyclettes selon une ou plusieurs des revendications 12 à 14, dans laquelle ladite couronne d'écartement (12) comprend une pluralité de curseurs (13) répartis circonférentiellement autour dudit axe central (A) qui, dans la configuration radialement élargie de la couronne d'écartement (12), définissent les sommets d'une forme polygonale élargie prise par ledit contour (2), et dans laquelle ledit élément de transfert (60) comprend une pluralité de points de préhension (61) répartis autour d'un axe de préhension (B), lesdits points de préhension (61) étant en nombre supérieur ou égal aux côtés de ladite forme polygonale élargie et répartis de telle sorte qu'au moins un point de préhension (61) agisse sur un côté de la forme polygonale élargie sur une surface radialement extérieure du pneu cru (1).
